# EUROPEAN PATENT APPLICATION

(11) **EP 1 630 627 A2**
(43) Date of publication of application: **01.03.2006**
(21) Application number: 05254838.5
(22) Date of filing: 03.08.2005
(51) Int. Cl.: G03H 1/26, G11B 7/0065

(54) **Volume holographic storage system**

(30) Priority: 23.08.2004 JP 2004241993
(71) Applicant: ALPS ELECTRIC CO., LTD., Ota-ku Tokyo 145 (JP)
(72) Inventor: Someno, Yoshihiro, Alps Electric Co., Ltd., Tokyo (JP); Mitsuya, Shinji, Alps Electric Co., Ltd., Tokyo (JP)
(74) Representative: Kensett, John Hinton

(57) **Abstract**

A holographic device includes a reference beam unit (1) that makes reference beams (15) incident on a plurality of holograms (31) formed in a plate-shaped recording medium (30); and a light receiving unit (2) that receives exiting light (33) diffracted by the holograms. The reference beam unit includes a light emitting part (10) that emits the reference beams (15), and sets the incidence position and the incidence angle of each of the reference beams emitted from the light emitting part such that each of the reference beams is incident on one of the plurality of holograms disposed in the thicknesswise direction of the recording medium. The light receiving unit includes a light receiving part (20) that receives the exiting light from the holograms and a pin-hole filter (21) disposed between the light receiving part (20) and the recording medium (30). The pin-hole filter transmits only exiting light from one of the plurality of holograms disposed in the thicknesswise direction of the recording medium, the one of the plurality of holograms corresponding to the incidence position and the incidence angle set by the reference beam unit, and blocks exiting light from the other holograms.

## Description

### BACKGROUND OF THE INVENTION

### 1. Field of the Invention

The present invention relates to a holographic device that reads out information recorded as holograms in a recording medium, and more particularly, to a holographic device capable of reading out information from a recording medium in which holograms are formed in a thicknesswise direction thereof.

### 2. Description of the Related Art

Conventionally, as storage devices used in a computer or the like, storage devices, in which information is two-dimensionally written or read out with respect to a recording medium by using a magnetic or optical method, have been widely used. A hard disk is known as a storage device using a magnetic recording medium, and a CD or DVD is known as a storage device using an optical recording medium. These storage devices have remarkably advanced in a recording density to meet a demand on a large capacity. Further, as a unit for achieving a larger capacity, storage devices using the holographic principle are under development.

The holographic devices read out information, which is recorded in the recording medium as holograms in a page unit, and reproduce the read information. In the recording medium, encoded information in a page unit is written as a pattern that, for example, an index of refraction varies. The pattern is a hologram formed by interference between an object beam and a reference beam in a storage device. Also, in order to read out the information from the recording medium, only the reference beam is incident on the recording medium by a light emitting part, is diffracted by the hologram pattern, and is received in a light receiving part composed of a photoelectric transducer such as a CCD or a CMOS, and thus the written information can be reproduced. For example, such a holographic device is disclosed in Japanese Unexamined Patent Application Publication No. 2003-43904.

Further, multi-recording of holograms is used to make a recording medium have a high density. An angular multiplexing method is known as one method in which the holograms are multi-recorded. Since a hologram formed in the recording medium can be read out by irradiating the same reference beam as used when the hologram is written at the same incidence angle, it is possible to multi-record holograms at the same location by changing the incidence angle of the reference beam.

A holographic device using the angular multiplexing method includes a reflecting mirror for changing the angle of the reference beam and a condensing lens. In the holographic device, a reference beam emitted from a light emitting unit is reflected on the reflecting mirror to be incident on a hologram in a recording medium by means of the condensing lens. The incidence angle of the reference beam with respect to the hologram is changed according to the angle change of the reflecting mirror. A galvano mirror is used to change the angle of the reference beam, and an 'f' lens is used as the condensing lens.

As such, conventionally, the high density of the recording medium has been achieved by two-dimensionally arranging holograms in the recording medium and by multi-recording the holograms at the same location using the angular multiplexing method.

However, a following problem occurs when the holograms are multi-recorded. That is, since the 'f' lens used as a condensing lens is expensive in the holographic device using the angular multiplexing method, a manufacturing cost of the holographic device increases.

### SUMMARY OF THE INVENTION

The invention has been made up to solve the above-mentioned problem, and it is an object of the invention to provide a holographic device in which information such as holograms can be written in a recording medium at a high density and be reproduced from the recording medium and which is relatively low priced.

In order to achieve the above object, according to an aspect of the invention, a holographic device includes a reference beam unit that makes reference beams incident on a plurality of holograms formed in a plate-shaped recording medium; and a light receiving unit that receives light emitted from the holograms. The reference beam unit includes a light emitting part that emits the reference beams, and sets the incidence position and the incidence angle of each of the reference beams emitted from the light emitting part such that each of the reference beams is incident on one of the plurality of holograms disposed in the thicknesswise direction of the recording medium. The light receiving unit includes a light receiving part that receives the light emitted from the holograms and a pin-hole filter disposed between the light receiving part and the recording medium. The pin-hole filter transmits only light emitted from one of the plurality of holograms disposed in the thicknesswise direction of the recording medium, the one of the plurality of holograms corresponding to the incidence position and the incidence angle set by the reference beam unit, and blocks light emitted from the other holograms.

Further, in the holographic device according to the invention, it is preferable that the reference beam unit further include a mirror having a reflecting surface on which the reference beams emitted from the light emitting part are reflected. Also, preferably, the mirror has a rotation driving section for changing the angle of the reflecting surface, and the incidence position and the incidence angle of each of the reference beams are set by changing the angle of the reflecting surface with respect to the reference beams by means of the rotation driving section.

Furthermore, in the holographic device according to the invention, it is preferable that the light emitting part in the reference beam unit be composed of a plurality of light emitting elements disposed to be spaced apart from one another at a predetermined distance, and the incidence position and the incidence angle of each of the reference beams be set by switching between the light emitting elements.

In addition, in the holographic device according to the invention, it is preferable that the reference beam unit further include a linear driving part that moves the light emitting part in a vertical direction with respect to the recording medium, and the incidence position and the incidence angle of each of the reference beams be set by changing a distance from the light emitting part to the recording medium by means of the linear driving part.

Moreover, in the holographic device according to the invention, it is preferable that the recording medium be formed with a plurality of hologram groups, each of the plurality of hologram groups being composed of the plurality of holograms each corresponding to the incidence position and the incidence angle of the reference beam set by the reference beam unit.

Further, in the holographic device according to the invention, it is preferable that the light emitting elements in the light emitting part be linearly disposed to be adjacent to one another.

Furthermore, in the holographic device according to the invention, it is preferable that the reference beam unit further include a lens that converts each of the reference beams emitted from the light emitting part into convergent light.

### BRIEF DESCRIPTION OF THE DRAWINGS

FIG. 1 is a conceptual view showing the configuration of a holographic device according to a first embodiment of the invention;
FIG. 2 is a cross-sectional view illustrating a case in which an upper hologram of holograms in a hologram group formed in a recording medium is read out, in the first embodiment;
FIG. 3 is a cross-sectional view illustrating a case in which a lower hologram in FIG. 2 is read out;
FIG. 4 is a conceptual view showing the configuration of a holographic device according to a second embodiment of the invention;
FIG. 5 is a cross-sectional view illustrating a case in which an upper hologram of holograms in a hologram group formed in a recording medium is read out, in the second embodiment;
FIG. 6 is a cross-sectional view illustrating a case in which a lower hologram in FIG. 5 is read out; and
FIG. 7 is a conceptual view showing the configuration of a holographic device according to a third embodiment of the invention.

### DESCRIPTION OF THE PREFERRED EMBODIMENT

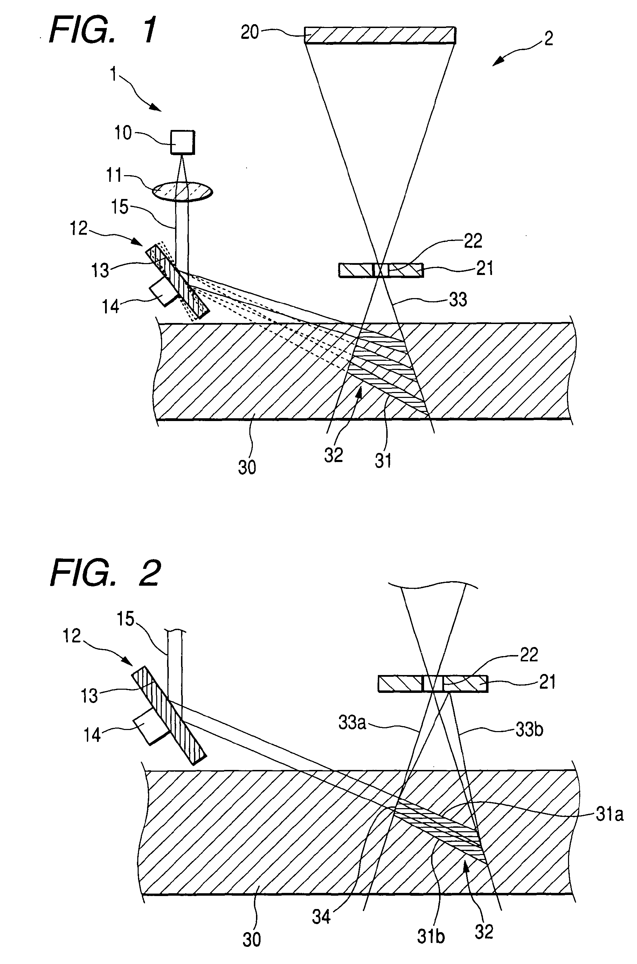

Hereinafter, preferred embodiments of the invention will be described in detail with reference to the accompanying drawings. FIG. 1 is a conceptual view showing the configuration of a holographic device according to a first embodiment of the invention. As shown in FIG. 1, the holographic device according to the present embodiment includes a reference beam unit 1, which makes reference beams 15 respectively incident on a plurality of holograms 31 formed in a widthwise direction of a plate-shaped recording medium 30, and a light receiving unit 2 which receives beams 33 emitted from the holograms 31.

The reference beam unit 1 includes a light emitting part 10 for emitting the reference beams 15, a lens 11 for converting the reference beams 15 emitted from the light emitting part 10 into collimated light, and a mirror 12 having a reflecting surface 13 on which the reference beams 15 emitted from the light emitting part 10 are reflected. The mirror 12 has a rotation driving section 14 for changing the angle of the reflecting surface 13.

The mirror 12 totally reflects the reference beams 15 on the reflecting surface 13 to change the directions of the reference beams 15. That is, the respective reference beams 15 are incident on the plurality of holograms 31 disposed in the thicknesswise direction of the recording medium 30 by controlling an incidence position and an incidence angle of the reference beam 15 with respect to the thicknesswise direction of the recording medium 30 by means of the mirror 12. In the present embodiment, a galvano mirror is used as the mirror 12 including the reflecting surface 13 and the rotation driving section 14.

The light receiving unit 2 includes a light receiving part 20 for receiving light 33 emitted from the recording medium 30 and a pin-hole filter 21 disposed between the light receiving part 20 and the recording medium 30. The pin-hole filter 21 has a through-hole 22 for transmitting light therethrough and transmits only the light condensed into the through-hole 22. Here, a light receiving element, such as a CCD or a CMOS, is used as the light receiving part 20.

In the recording medium 30 according to the present embodiment, forming as the hologram 31 interference fringes between the reference beam 15 and an object beam having encoded information in a page unit can record information. Also, the information is reproduced by using the same light as the reference beam 15 used to form the hologram 31, and the reproduced information is then read out.

In the recording medium 30 according to the present embodiment, it is supposed that the plurality of holograms 31 be recorded therein in advance. Also, the plurality of holograms 31 are disposed in a thicknesswise direction of the plate-shaped recording medium 30. The mirror 12 included in the reference beam unit 1 sets the incidence position and the incidence angle of the reference beam 15 with respect to the thicknesswise direction of the recording medium 30. In the recording medium 30 are formed a plurality of hologram groups 32, each being composed of a plurality of holograms 31 disposed in the thicknesswise direction of the recording medium 30 so as to correspond to the incidence position and the incidence angle of the reference beam 15 set by the mirror 12.

Further, the respective holograms 31 formed in the recording medium 30 are configured such that the light 33 emitted from the hologram 31 corresponding to the incidence position and the incidence angle of the reference beam 15 is condensed into the through-hole 22 of the pin-hole filter 21. Thereby, the pin-hole filter 21 transmits only the light 33 emitted from the hologram 31 corresponding to the incidence position and the incidence angle of the reference beam 15 set by the mirror 12.

As such, the plurality of holograms 31 disposed in the thicknesswise direction of the recording medium 30 can be respectively read out. Therefore, the recording area of the recording medium 30 can be enlarged in the thicknesswise direction thereof, thereby forming the holograms 31 in the recording medium 30 at a high density.

Here, since the reference beam unit 1 does not need a condensing lens used in a conventional angular multiplexing method, it is possible to manufacture the reference beam unit 1 at lower cost as compared to the conventional one. Further, since the angle of the reflecting surface 13 provided in the mirror 12 can be minutely changed by the rotation driving section 14, the mirror 12 can set a number of incident positions and angles for the reference beam 15. Accordingly, it becomes possible to form the plurality of holograms 31 disposed in the thicknesswise direction of the recording medium 30 to constitute the hologram group 32, so that the recording density of the recording medium 30 can be further increased.

In the recording medium 30, the plurality of hologram groups 32, each being composed of the plurality of holograms 31 disposed in the thicknesswise direction of the recording medium 30, are formed. Accordingly, in order to reproduce the holograms 31 in the different hologram group 32, the recording medium 30 needs to be moved to switch between the hologram groups 32. The holographic device of the present embodiment includes a driving unit (not shown), which moves the relative position of the recording medium 30 with respect to reference beam unit 1 and the light receiving unit 2. Here, the driving unit may move the reference beam unit 1 and the light receiving unit 2 with the recording medium 30 fixed.

Now, it will be described how the information recorded in the recording medium 30 is read out in the present embodiment. As shown in FIG. 1, the reference beam 15 emitted from the light emitting part 10 is converted into the collimated light through the lens 11, and then reaches the reflecting surface 13 provided in the mirror 12. The reflecting surface 13 sets the incidence position and the incidence angle of the reference beam 15 such that the reference beam 15 is incident on one of the plurality of holograms 31, disposed in the thicknesswise direction of the recording medium 30, constituting the hologram group 32, by changing the angle of the reflecting surface 13 with respect to the reference beam 15 by means of the rotation driving section 14, and thus allows the reference beam 15 to be incident on a corresponding hologram 31. The light 33 emitted from the hologram 31 corresponding to the reference beam 15 set by the mirror 12 passes through the pin-hole filter 21 to be received in the light receiving part 20.

In the same manner, the reflecting surface 13 sets the incidence position and the incidence angle of the reference beam 15 such that the reference beam 15 is incident on another hologram 31 in the hologram group 32 by changing the angle of the reflecting surface 13 with respect to the reference beam 15 and thus allows the reference beam 15 to be incident on a corresponding hologram 31, so that it is possible to read out the respective holograms 31 in the hologram group 32 which are disposed in the thicknesswise direction of the recording medium 30.

Further, since the angle of the reflecting surface 13 provided in the mirror 12 can be minutely changed by the rotation driving section 14, the holograms 31 in the hologram group 32 can be formed at a high density in accordance with the angle change. Thereby, each of the holograms 31 in the hologram group 32 is disposed to partially overlap an adjacent hologram 31.

FIG. 2 shows a schematic cross-sectional view illustrating a case in which an upper hologram 31a, of two holograms 31a and 31b in the hologram group 32 partially overlapping each other, is read out. In FIG. 2, the light emitting part 10 and the lens 11 included in the reference beam unit 1 and the light receiving part 20 included in the light receiving unit 2 are omitted.

The reflecting surface 13 provided in the mirror 12 sets the incidence position and the incidence angle of the reference beam 15 by means of the rotation driving section 14 such that the reference beam 15 is incident on the upper hologram 31a. Thereby, the reference beam 15 is incident on the upper hologram 31a formed in the recording medium 30.

The reference beam 15 is also incident on an overlapping portion 34 of the lower hologram 31b partially overlapping the upper hologram 31a on which the reference beam 15 is incident, and thus light is emitted from the overlapping portion 34 of the lower hologram 31b partially overlapping the upper hologram 31a.

Here, light 33a emitted from the upper hologram 31a corresponding to the incidence position and the incidence angle of the reference beam 15 set by the mirror 12 is condensed into the through-hole 22 of the pin-hole filter 21. However, since the overlapping portion 34 of the lower hologram 31b partially overlapping the upper hologram 31a does not correspond to the incidence angle of the reference beam 15 set by the mirror 12, light 33b emitted from the overlapping portion 34 is not condensed into the through-hole 22 of the pin-hole filter 21 but is condensed at a position deviating from the through-hole 22. Accordingly, the light 33a emitted from the upper hologram 31a passes through the pin-hole filter 21, but the light 33b emitted from the lower hologram 31b is blocked by the pin-hole filter 21. As a result, only the light 33a emitted from the upper hologram 31a can be received in the light receiving part 20.

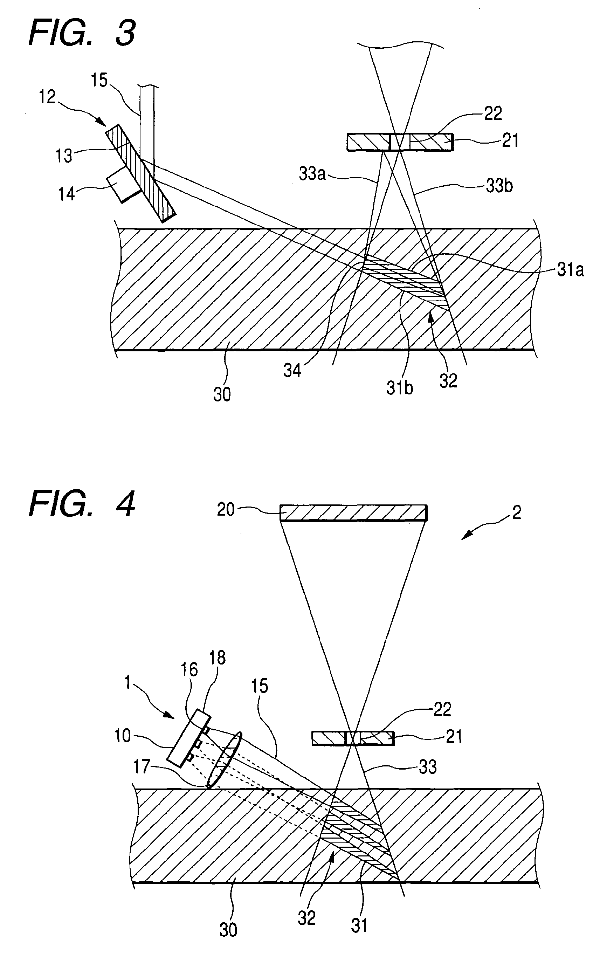

Next, a case will be described in which the lower hologram 31b of the two holograms 31a and 31b in the hologram group 32 is read out. As shown in FIG. 3, the reference beam 15 is incident on the lower hologram 31b, with the incidence position and the incidence angle thereof set by the mirror 12 such that the reference beam 15 is incident on the lower hologram 31b.

The pin-hole filter 21 transmits only light 33b emitted from the lower hologram 31b corresponding to the incidence position and the incidence angle of the reference beam 15 set by the mirror 12, and blocks the light 33a, which does not correspond to the incidence angle of the reference beam 15 set by the mirror 12, emitted from the overlapping portion 34 of the upper hologram 31a partially overlapping the lower hologram 31b. Accordingly, only the light 33b emitted from the lower hologram 31b can be received in the light receiving part 20.

Next, a second embodiment of the invention will be described. A reference beam unit 1 according to the present embodiment includes a light emitting part 10 composed of a plurality of light emitting elements 16, as shown in FIG. 4. The plurality of light emitting elements 16 are disposed on a substrate 18 of the light emitting part 10 so as to be spaced apart from one another at a predetermined distance and emit light in directions perpendicular to the substrate 18 of the light-emitting part 10, respectively. Here, a surface-emitting element, such as a surface-emitting laser, is used as the light emitting element 16. Further, the reference beam unit 1 includes a lens 17 for converting light emitted from each of the light emitting elements 16 into convergent light.

In a recording medium 30 according to the present embodiment, a plurality of holograms 31 are disposed in a thicknesswise direction of the recording medium 30 in accordance with the distance between the light emitting elements 16, thereby forming a hologram group 32. Since the respective light emitting elements 16 emit light in the directions perpendicular to the substrate 18 of the light-emitting part 10, the reference beams 15 emitted from the light emitting elements 16 are incident on the recording medium 30 at the same angle. Accordingly, the reference beam unit 1 can set the incidence position of the reference beam 15 by switching between the light emitting elements 16 and emitting light, and thus the reference beam 15 emitted from the light emitting part 10 can be incident on each of the holograms 31 disposed in the thicknesswise direction of the recording medium 30.

Here, a surface-emitting element, such as a surface-emitting laser, is used as the respective light emitting elements 16 constituting the light emitting part 10. Since the light emitting elements 16 can be simultaneously formed in one process, the manufacturing process becomes simple, thereby manufacturing the reference beam unit 1 at a lower cost as compared to the conventional one using the angular multiplexing method.

Further, since the light emitting elements 16 can be disposed at a short distance, when the light emitting elements 16 are linearly disposed to be adjacent to one another, it becomes possible to form the hologram group 32, including the plurality of holograms 31 disposed in the thicknesswise direction of the recording medium 30, correspondingly to the disposition. As a result, the recording density of the recording medium 30 can be further increased. For this reason, each of the holograms 31 in the hologram group 32 is disposed to partially overlap the adjacent hologram 31.

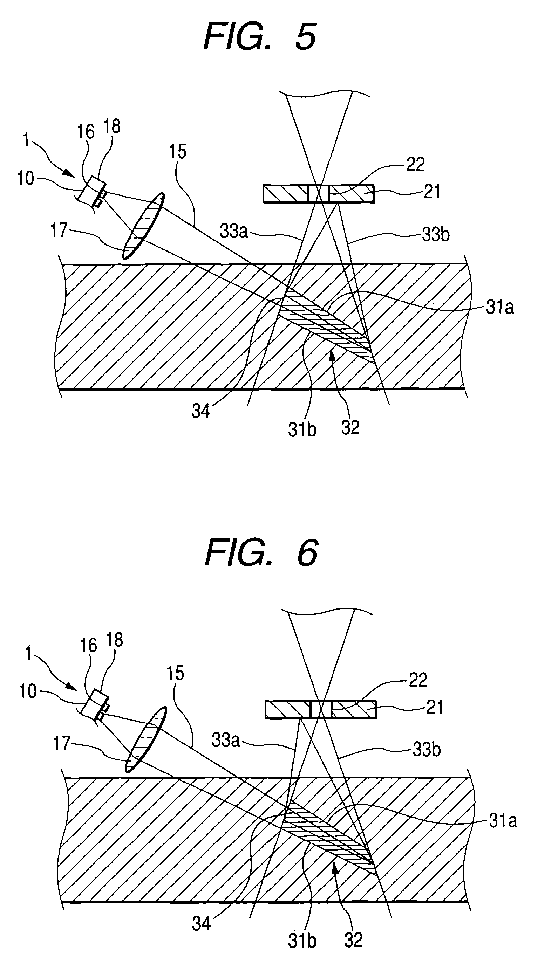

FIG. 5 shows a schematic cross-sectional view illustrating a case in which the upper hologram 31a, of the two holograms 31a and 31b in the hologram group 32 partially overlapping each other, is read out. In FIG. 5, the light receiving part 20 included in the light receiving unit 2 is omitted.

By switching between the light emitting elements 16, the reference beam unit 1 sets the incidence position of the reference beam 15 such that the reference beam 15 is incident on the upper hologram 31a. As such, the reference beam 15 is incident on the upper hologram 31a formed in the recording medium 30.

The reference beam 15 is also incident on the overlapping portion 34 of the lower hologram 31b partially overlapping the upper hologram 31a on which the reference beam 15 is incident, and thus light is emitted from the overlapping portion 34 of the lower hologram 31b partially overlapping the upper hologram 31a.

Here, since the reference beam 15 emitted from each of the light emitting elements 16 is converted into convergent light through the lens 17, the incidence angle with respect to a lower side of the upper hologram 31a when the reference beam 15 is set to be incident on the upper hologram 31a is different from the incidence angle with respect to an upper side of the lower hologram 31b when the reference beam 15 is set to be incident on the lower hologram 31b. Accordingly, in the same manner as the first embodiment, the light 33a emitted from the upper hologram 31a can be separated from the light 33b emitted from the overlapping portion 34 of the lower hologram 31b partially overlapping the upper hologram 31a by means of the pin-hole filter 21. As a result, only the light 33a, corresponding to the incidence position and the incidence angle of the reference beam 15 set by the reference beam unit 1, which is emitted from the upper hologram 31a, can be received in the light receiving part 20.

Further, when the lower hologram 31b is read out, as shown in FIG. 6, the incidence position of the reference beam 15 is set by switching between the light emitting elements 16 such that the reference beam 15 is incident on the lower hologram 31b, and thus the reference beam 15 is incident on the lower hologram 31b. The pin-hole filter 21 transmits only the light 33b emitted from the lower hologram 31b corresponding to the set incidence position and incidence angle of the reference beam 15, and blocks the light 33a, which does not correspond to the set incidence angle of the reference beam 15 and is emitted from the overlapping portion 34 of the upper hologram 31a partially overlapping the lower hologram 31b. Accordingly, only the light 33b emitted from the lower hologram 31b can be received in the light receiving part 20.

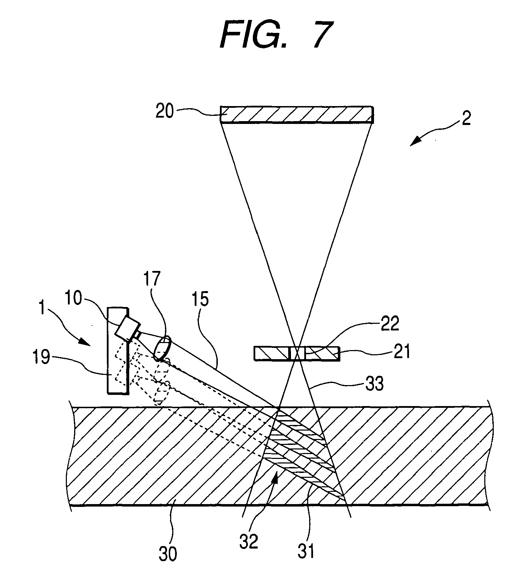

Next, a third embodiment of the invention will be described. A reference beam unit 1 according to the present embodiment includes a linear driving part 19 which moves a light emitting part 10 in a vertical direction with respect to a recording medium 30, as shown in FIG. 7. Further, the reference beam unit 1 includes a lens 17, which converts light emitted from the light emitting part 10 into convergent light.

Since the linear driving part 19 moves the light emitting part 10 in the vertical direction with respect to the recording medium 30, the incidence direction of the reference beam 15 emitted from the light emitting part 10 with respect to the recording medium 30 does not change, and thus the incidence angle of the reference beam 15 with respect to the recording medium 30 becomes constant. As such, the reference beam unit 1 can set the incidence position of the reference beam 15 with respect to the recording medium 30 by moving the light emitting part 10 in the vertical direction with respect to the recording medium 30 by means of the linear driving part 19, and accordingly, the reference beams 15 emitted from the light emitting part 10 can be respectively incident on holograms 31 in a hologram group 32 disposed in a thicknesswise direction of the recording medium 30. Here, the linear driving part 19 has the simple structure in which the light emitting part 10 move only in the vertical direction with respect to the recording medium 30, so that it is possible to manufacture the reference beam unit 1 at lower cost as compared to the conventional one using the angular multiplexing method.

Further, the light emitting part 10 can be minutely moved by the linear driving part 19, thereby setting a number of incidence positions for the reference beam 15. Also, it becomes possible to form the holograms 31 in the hologram group 32 at a high density in accordance with the incidence position setting. In addition, even when each of the holograms 31 in the hologram group 32 is disposed to partially overlap an adjacent hologram 31, the reference beam 15 emitted from the light emitting part 10 is converted into convergent light through the lens 17, so that only light 33 emitted from the desired hologram 31 can be received in the light receiving part 20, in the same manner as the second embodiment.

According to the holographic device of the invention, the reference beam unit sets the incidence position and the incidence angle of each of the reference beams emitted from the light emitting part such that each of the reference beams is incident on one of the plurality of holograms disposed in the thicknesswise direction of the recording medium, and the pin-hole filter provided in the light receiving unit transmits only light emitted from the hologram corresponding to the incidence position and the incidence angle set by the reference beam unit and blocks light emitted from the other holograms. Accordingly, it becomes possible to read out the plurality of holograms disposed in the thicknesswise direction of the recording medium. Thereby, the recording area of the recording medium can be enlarged in the thicknesswise direction thereof, and as a result, it becomes possible to form the holograms in the recording medium at a high density.

Further, according to the holographic device of the invention, the reference beam unit further includes a mirror having a reflecting surface on which the reference beams emitted from the light emitting part are reflected, the mirror has a rotation driving section for changing the angle of the reflecting surface, and the incidence position and the incidence angle of each of the reference beams are set by changing the angle of the reflecting surface with respect to the reference beams by means of the rotation driving section. Thereby, the reference beams can be respectively incident on the holograms disposed in the thicknesswise direction of the recording medium. Also, since the reference beam unit does not need a condensing lens used in the conventional angular multiplexing method, it is possible to manufacture the reference beam unit at lower cost as compared to the conventional one.

Furthermore, according to the holographic device of the invention, the light emitting part in the reference beam unit is composed of a plurality of light emitting elements disposed to be spaced apart from one another at a predetermined distance, and the incidence position and the incidence angle of each of the reference beams are set by switching between the light emitting elements. Accordingly, the reference beams can be respectively incident on the holograms disposed in the thicknesswise direction of the recording medium. Also, since the light emitting elements can be simultaneously formed in one process, the manufacturing process becomes simple, thereby manufacturing the reference beam unit at a lower cost as compared to the conventional one using the angular multiplexing method.

In addition, according to the holographic device of the invention, the reference beam unit further includes the linear driving part that moves the light emitting part in a vertical direction with respect to the recording medium, and the incidence position and the incidence angle of each of the reference beams are set by changing a distance from the light emitting part to the recording medium by means of the linear driving part. Accordingly, the reference beams can be respectively incident on the holograms disposed in the thicknesswise direction of the recording medium. Also, since the linear driving part has the simple structure in which the light emitting part moves in the vertical direction with respect to the recording medium, it is possible to manufacture the reference beam unit at lower cost as compared to the conventional one using the angular multiplexing method.

Moreover, according to the holographic device of the invention, the recording medium is formed with the plurality of hologram groups, each of the plurality of hologram groups being composed of the plurality of holograms each corresponding to the incidence position and the incidence angle of the reference beam set by the reference beam unit. Accordingly, it becomes possible to form the plurality of hologram groups, each of the plurality of hologram groups having the plurality of holograms disposed in the thicknesswise direction of the recording medium, so that the recording density of the recording medium can be further increased.

Further, according to the holographic device of the invention, the light emitting elements in the light emitting part are linearly disposed to be adjacent to one another. Thereby, the reference beam unit can set a number of incidence positions and incidence angles for the reference beams in the thicknesswise direction of the recording medium, and a number of holograms can be formed in the recording medium in accordance with the setting. As a result, the recording density of the recording medium can be further increased.

Furthermore, according to the holographic device of the invention, the reference beam unit converts each of the reference beams emitted from the light emitting part into convergent light. Accordingly, even when each of the holograms formed in the thicknesswise direction of the recording medium is disposed to partially overlap an adjacent hologram, the incidence angle of the reference beam, set by the reference beam unit, incident on each of the holograms becomes different in an overlapping portion of each of the holograms, and the reference beams can be separated by using the pin-hole filter. As a result, only a desired hologram can be read out, thereby further increasing the recording density of the recording medium.

Although the embodiments of the invention have been described, it is to be understood that the invention is not limited thereto, but various changes and modifications thereof can be made without departing from the spirit or scope of the invention. For example, by separating the light emitted from the light emitting part 10 to use a part of the separated light as an object beam, the holographic device may both write and read out the holograms 31. In addition, the number of holograms 31, constituting the hologram group 32, formed in the thicknesswise direction of the recording medium 30 is not limited to the present embodiments, but it is possible to form a hologram group 32 composed of much more holograms 31 than in the embodiments described above.

## Claims

1. A holographic device comprising:
a reference beam unit that makes reference beams incident on a plurality of holograms formed in a plate-shaped recording medium; and
a light receiving unit that receives light emitted from the holograms,
wherein the reference beam unit includes a light emitting part that emits the reference beams, and sets an incidence position and an incidence angle of each of the reference beams emitted from the light emitting part such that each of the reference beams is incident on one of the plurality of holograms disposed in the thicknesswise direction of the recording medium,
the light receiving unit includes a light receiving part that receives the light emitted from the holograms and a pin-hole filter disposed between the light receiving part and the recording medium, and
the pin-hole filter transmits only light emitted from one of the plurality of holograms disposed in the thicknesswise direction of the recording medium, the one of the plurality of holograms corresponding to the incidence position and the incidence angle set by the reference beam unit, and blocks light emitted from the other holograms.

2. The holographic device according to claim 1,
wherein the reference beam unit further includes a mirror having a reflecting surface on which the reference beams emitted from the light emitting part are reflected,
the mirror has a rotation driving section for changing the angle of the reflecting surface, and
the incidence position and the incidence angle of each of the reference beams are set by changing the angle of the reflecting surface with respect to the reference beams by means of the rotation driving section.

3. The holographic device according to claim 1,
wherein the light emitting part in the reference beam unit is composed of a plurality of light emitting elements that are disposed to be spaced apart from one another at a predetermined distance, and
the incidence position and the incidence angle of each of the reference beams are set by switching between the light emitting elements.

4. The holographic device according to claim 1,
wherein the reference beam unit further includes a linear driving part that moves the light emitting part in a vertical direction with respect to the recording medium, and
the incidence position and the incidence angle of each of the reference beams are set by changing a distance from the light emitting part to the recording medium by means of the linear driving part.

5. The holographic device according to claim 1,
wherein the recording medium is formed with a plurality of hologram groups, each of the plurality of hologram groups being composed of the plurality of holograms each corresponding to the incidence position and the incidence angle of the reference beam set by the reference beam unit.

6. The holographic device according to claim 3,
wherein the light emitting elements in the light emitting part are linearly disposed to be adjacent to one another.

7. The holographic device according to claim 3,
wherein the reference beam unit further includes a lens that converts each of the reference beams emitted from the light emitting part into convergent light.

8. The holographic device according to claim 4,
wherein the reference beam unit includes a lens that converts each of the reference beams emitted from the light emitting part into convergent light.
